# EUROPÄISCHE PATENTSCHRIFT

(11) **EP 1 183 524 B1**
(45) Veröffentlichungstag und Bekanntmachung des Hinweises auf die Patenterteilung: **13.07.2005**
(21) Anmeldenummer: 00934982.0
(22) Anmeldetag: 04.05.2000
(51) Int. Cl.: G01N 21/51, G01N 21/49, G01N 21/03

(54) **MESSUNG VON TRÜBUNGEN MITTELS REFLEKTOMETRIE**
MEASURING TURBIDITIES BY REFLECTOMETRY
MESURES DE TROUBLES PAR REFLECTOMETRIE

(30) Priorität: 19.05.1999 DE 19922812
(43) Veröffentlichungstag der Anmeldung: 06.03.2002
(73) Patentinhaber: MERCK PATENT GmbH, 64271 Darmstadt (DE)
(72) Erfinder: TANZER, Dieter, D-64372 Ober-Ramstadt (DE)
(86) Internationale Anmeldenummer: PCT/EP2000/003977
(87) Internationale Veröffentlichungsnummer: WO 2000/071994

(56) Entgegenhaltungen:
- EP-A- 0 874 233
- SU-A- 1 497 522
- US-A- 4 278 887
- US-A- 4 552 458

## Beschreibung

Die Erfindung betrifft ein Verfahren zur quantitativen Messung von Trübungen.

Die Trübung einer Flüssigkeit wird verursacht durch die Anwesenheit ungelöster Stoffe, wie z.B. suspendierter fester Partikel oder emulgierter Öle. Trübungsmessungen finden mannigfaltige Anwendungen in der Prozeßkontrolle/Qualitätskontrolle verschiedenster Industriezweige, wie z.B. in Lebensmittelbetrieben, Wasserwerken sowie in der kosmetischen, chemischen und petrochemischen Industrie. Besonders häufig werden Trübungsmessungen zur Untersuchung von Getränken (z.B. Messung der Trübung von Bier und Wein in Brauereien und Keltereien), und industriell verarbeiteten Flüssigkeiten herangezogen. Sie finden ferner Anwendungen bei der Untersuchung von Aerosolen und bei Trübungstitrationen. In der medizinischen Diagnostik werden Antigen- oder Antikörper-Gehalt sowie die Konzentration anderer Eiweiß-Verbindungen in Körperflüssigkeiten bestimmt. Weiterhin werden Trübungsmessungen bei analytischen Verfahren unter Anwendung von Fällungsreaktionen eingesetzt.

Trübungsmessungen dienen prinzipiell dazu, zwei unterschiedliche Fragestellungen zu untersuchen:
1. Erfüllt das hergestellte Produkt bzw. das im Produktionsprozeß befindliche Zwischenprodukt die gewünschten Anforderungen?
   Beispielsweise können bei Getränken mangelhafte Konservierung, ungenügende Hygiene, unvollständige Filtrationen bzw. ungünstige Lagerbedingungen eine unerwünschte Vermehrung von Mikroorganismen verbunden mit Trübungen nach sich ziehen. Daneben können aber auch überhöhte Konzentrationen an Getränkeinhaltsstoffen bzw. Fremdstoffen wie Filterhilfsmittel zu Trübungen führen und ein Getränk bis zur Ungenießbarkeit verändern. Mit Hilfe von Trübungsmessungen lassen sich diese Fehler rechtzeitig erkennen.
2. Wie hoch ist die Konzentration eines zu bestimmenden Stoffes in der zu untersuchenden Flüssigkeit?

Ein Beispiel hierfür ist die Bestimmung von Kalium. Kaliumionen bilden in alkalischer Lösung mit Natriumtetraphenylborat einen schwerlöslichen Niederschlag. Der proportionale Zusammenhang zwischen der Konzentration an Kalium und der Trübungsintensität nach Zugabe des Fällungsreagenzes ermöglicht eine quantitative Kaliumbestimmung.

Zur Bestimmung der Intensität einer Trübung werden neben halbquantitativen Verfahren (Verfahren mit Durchsichtigkeitszylindern bzw. Sichtscheiben) quantitative Verfahren unter Verwendung optischer Trübungsmeßgeräte eingesetzt. Optische Trübungsmeßgeräte arbeiten dabei nach zwei unterschiedlichen physikalischen Prinzipien:
- Messung der Schwächung der Intensität eines durch die Flüssigkeit durchgehenden Lichtstrahls (Turbidimetrie)
- Messung der Intensität der Streustrahlung (Nephelometrie)

Einfache Methoden zur Untersuchung einer Trübung mittels Durchsichtigkeitszylindern oder Sichtscheiben erfüllen aufgrund der Ungenauigkeit und Subjektivität häufig nicht die Ansprüche der Untersuchungslaboratorien. Umgekehrt stehen für quantitative Bestimmungsmethoden auf Basis von Lichtschwächung bzw. Lichtstreuung nur sehr teure, teilweise nur von geschulten Mitarbeitern bedienbare, Analysengeräte (Photometer bzw. reine Trübungsmeßgeräte, wie Nephelometer) zur Verfügung. Trübungsmeßgeräte auf Basis von Streulichtmessung gestatten zudem nur die alleinige Bestimmung der Trübung einer Probe. Häufig müssen jedoch neben der Trübung noch weitere Parameter in der Probe bestimmt werden, die möglichst mit demselben Analysengerät bzw. Analysenprinzip bestimmt werden sollen. Außerdem sollte gerade für die "In-Prozeß"-Kontrolle die Messung direkt vor Ort mit einfachen Meßvornchtungen möglich sein.

Der vorliegenden Erfindung liegt daher die Aufgabe zugrunde, ein Verfahren zur Verfügung zu stellen, das eine einfache, schnelle und quantitative Bestimmung von Trübungen gestattet. Zudem sollte das Meßprinzip auch die Analyse weiterer qualitätsrelevanter Parameter in ebenso einfacher Weise ermöglichen.

Es wurde gefunden, daß man mit einem Reflektometer, wie es zur Bestimmung von trägergebundenen Tests eingesetzt wird und in vielfältigen Ausführungsformen im Handel erhältlich ist, auch quantitative Trübungsmessungen in einer Küvette durchführen kann. Dazu muß das Reflektometer mit einem geeigneten Küvettenadapter, der die Analyse von Küvetten ermöglicht, und mit einem diffus reflektierenden Bauteil versehen werden.

Gegenstand der Erfindung ist deshalb ein Verfahren gemäß Anspruch 1.

Gegenstand der Erfindung ist weiterhin eine Trübungsmeßvorrichtung gemäß Anspruch 2.

Bevorzugte Ausführungsform der erfindungsgemäßen Meßvorrichtung ist ein Gerät, das Leuchtdioden als Lichtquellen und Photodioden als Detektoren besitzt.

Abb. 1 zeigt eine entsprechende Ausführungsform eines erfindungsgemäßen Trübungsmeßgeräts.

Abb. 2 zeigt die Meßkurve eines Formazinprimärstandards wie er zur Kalibration verwendet wird.

In Abb. 3 ist der Zusammenhang zwischen der Konzentration an Sulfat und den erhaltenen relativen Remissionen dargestellt.

Abb. 4 zeigt den Zusammenhang zwischen der Konzentration an Kalium und den erhaltenen relativen Remissionen.

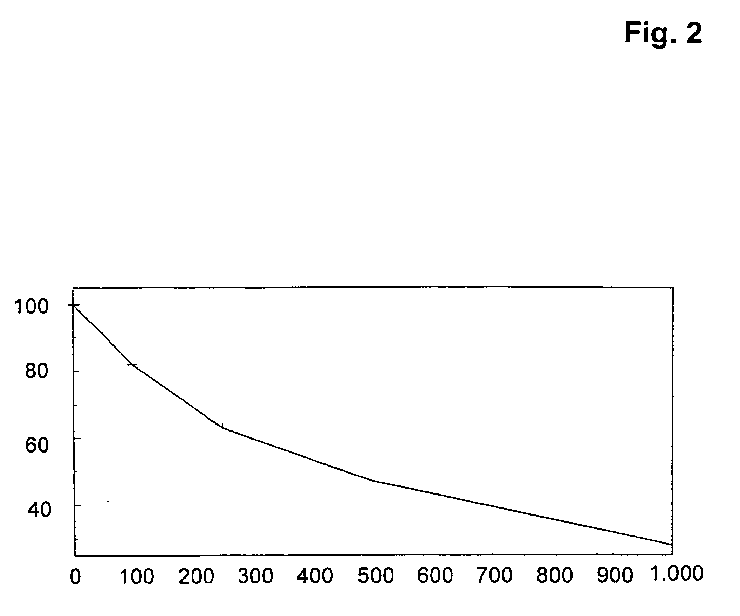

Nähere Angaben zu den Abbildungen 2 - 4 finden sich in den Beispielen 1 bis 3.

Die Bestimmung von Trübungen erfolgt nach dem erfindungsgemäßen Verfahren mittels Reflektometrie. Die Reflektometrie wird normalerweise zur Auswertung trägergebundener Tests eingesetzt. Bei diesen Tests sind die Reagenzien in entsprechenden Schichten eines festen Testträgers eingebettet, auf den die Probe aufgebracht wird. Die Reaktion der Probe mit dem Reagenzsystem führt zu einem Farbumschlag auf dem Testträger. Zu den Testträgern werden vielfach Auswertegeräte angeboten, die eine quantitative Analyse der Farbänderung und damit der Konzentration eines Analyten ermöglichen. Die Auswertegeräte (Reflektometer) arbeiten üblicherweise nach einem reflexionsphotometrischen Pnnzip, d.h. es wird die Reflektivität (diffuse Reflexion) der Meßfläche bei einer oder mehreren Wellenlängen gemessen. Reflektometer lassen sich durch Anwendung von Leuchtdioden als Lichtquellen und Photodioden als Detektoren sehr klein und preiswert gestalten.

Für das erfindungsgemäße Verfahren eignet sich jede Art von Reflektometer, in das eine Küvette oder ein Gefäß gleicher Funktion eingebracht werden kann. Es kann sich dabei um Geräte handeln, die zugleich zur Auswertung trägergebundener Tests dienen können oder um speziell für die Trübungsmessung konzipierte Geräte. In beiden Fällen muß eine Vorrichtung oder Halterung zum Einsatz von Küvetten vorhanden sein. Die bei trägergebundenen Tests vom Teststreifen übernommene Funktion der diffusen Reflexion wird in dem erfindungsgemäßen Verfahren von einem hinter der Küvette angebrachten diffus reflektierenden Bauteil, beispielsweise aus Cellulose, Titandioxid und anderen dem Fachmann bekannten Materialien, bevorzugt aus einem geeigneten Kunststoff, z.B. einem Polycarbonat wie Makrolon®, übernommen. Genauso kann eine speziell gefertigte Küvette verwendet werden, die eine diffus reflektierende Seite besitzt. Diese Varianten werden im Folgenden als diffus reflektierendes Bauteil bezeichnet.

Zur Trübungsmessung in einem Reflektometer werden die Probenlösungen vorzugsweise in eine Küvette gegeben. Diese Küvetten müssen die aus der Durchlichtmessung (Photometrie) bekannten, optischen Eigenschaften besitzen und sollten eine Schichtdicke von 0,3 - 1,0 cm, bevorzugterweise 0,5 cm aufweisen. Sie können wie für Küvetten üblich, d.h. beispielsweise rechteckig, geformt sein.

Weiterhin kann das erfindungsgemäße Verfahren auch zur Durchflußmessung verwendet werden. Dazu wird anstelle der Standardküvette eine Durchflußküvette eingesetzt. Auf diese Weise kann beispielsweise während der Produktion die Trübung der Produkte im Durchfluß oder in definierten Zeitabständen ohne manuellen Aufwand und Austausch der Küvette erfolgen.

Alle weiteren Bestandteile eines Reflektometers, wie Lichtquellen, Detektoren, Spiegel, Prismen oder Filter sind dem Fachmann bekannt und können in ihrer Ausführungsart variiert werden. Beispiele finden sich in Ullmanns Encyclopedia of Industrial Chemistry, B5, 1994. Bevorzugte Ausführungsform eines Meßgeräts für das erfindungsgemäße Verfahren ist ein handliches Reflektometer für den direkten Gebrauch vor Ort, das Leuchtdioden als Lichtquellen und Photodioden als Detektoren besitzt. Ein derartiges Gerät wird beispielsweise unter der Bezeichnung RQflex Plus® von der Firma Merck KGaA, Darmstadt, Deutschland, vertrieben.

Das erfindungsgemäße Verfahren kann für Messungen, wie sie derzeit mit Durchsichtigkeitszylindern bzw. Sichtscheiben durchgeführt werden, eingesetzt werden oder zur Bestimmung von Stoffkonzentrationen in Lösungen.

Durch die Möglichkeit, kleine, einfach zu bedienende Reflektometer zu verwenden, bietet das erfindungsgemäße Verfahren große Vorteile gegenüber den herkömmlichen Meßmethoden mit Photometern oder Nephelometern. Zudem können unter Verwendung desselben Reflektometers neben den Remissionsmessungen auch trockenchemische und naßchemische Tests (z.B. Teststreifen, Farbmessung mittels Küvettentests) durchgeführt werden, ohne daß der Strahlengang modifiziert werden muß.

In dem erfindungsgemäßen Verfahren wird die Probe von einem typischerweise durch die Konstruktion der Lichtquelle gebündelten Lichtstrahl durchdrungen. Der Lichtstrahl wird nach Durchdringen der Probe diffus reflektiert und durchdringt die Probe erneut. Die Detektion erfolgt abschließend in einem Winkel zur Einfallsrichtung des Strahls. Dieser Winkel zwischen einfallendem Strahl und Detektor sollte nicht im Bereich der regulären Reflexion liegen. Bei dem erfindungsgemäßen Verfahren kann der Lichtstrahl senkrecht auf die Probe und das diffus reflektierende Bauteil treffen oder in einem Winkel zwischen 90 und 30 °. In diesem Fall wird der Winkel des Detektors entsprechend angepasst. Bevorzugt wird senkrecht, also in einem Winkel von 90 °, zur Probe eingestrahlt und in einem entsprechenden Winkel dazu detektiert.

Es erfolgt jedoch nicht, wie bei der Nephelometrie, eine Messung des Streulichtes in einem Winkel z.B. senkrecht zur Einstrahlrichtung. Vielmehr wird die Abschwächung des Lichtstrahls bestimmt, die durch die Trübung der Lösung hervorgerufen wird. Auch bei bekannten turbidimetrischen Verfahren dient die Abschwächung des Lichtstrahls als Parameter für die Stärke der Trübung. Allerdings befinden sich bei photometrischen Verfahren Lichtquelle und Detektor auf entgegengesetzten Seiten der Probe, während bei der erfindungsgemäßen Messung der Lichtstrahl die Probe durchdringt, diffus reflektiert und erneut durch die Probe durchtritt. Lichtquelle und Detektor befinden sich demnach auf derselben Seite der Meßküvette bzw. der Probe. Der Arbeitsbereich wird bei dem erfindungsgemäßen Verfahren daher so gewählt, daß die Trübung in der Probe lediglich zu einer Lichtschwächung führt. Bei zu starken Trübungen wird ein überhöhtes, nicht durch Probenparameter modifiziertes, Signal beobachtet.

Die Genauigkeit der Bestimmung von kleinen Mengen an gelösten Substanzen durch Trübungsmessung beispielsweise nach Fällungsreaktionen ist abhängig von der Herstellung geeigneter Standards für die Kalibrierung, da die Korngröße eines Niederschlages von vielen Faktoren (Temperatur, pH, Fremdelektrolyte etc.) abhängt. Die Trübung ist daher ein Konventionsparameter. Zur Kalibrierung der erfindungsgemäßen Trübungsmeßgeräte werden, wie in herkömmlichen Verfahren üblich, wässrige Lösungen von Formazin, zugänglich aus der Reaktion von Hydrazinsulfat und Hexamethylentetramin, als Trübungsstandard verwendet. Als Trübungseinheit sind zur Unterscheidung der angewandten Meßtechnik im Falle der Messung der Intensität der Lichtschwächung "Formazine Attenuation Units" (FAU), im Falle der Messung der Intensität der Lichtstreuung "Formazine Nephelometric Units" (FNU) definiert. Die Reflektometer, die für das erfindungsgemäße Verfahren eingesetzt werden, sind demnach bevorzugt auf "Formazine Attenuation Units" (FAU) kalibiriert.

Auch zur quantitativen Bestimmung anderer Stoffe werden die Geräte vorzugsweise vorkalibriert. Dazu wird, wie beispielsweise in Beispiel 3 beschrieben, eine Kalibrationskurve erstellt. Der bei der Kalibrationsmessung erhaltene Zusammenhang zwischen Konzentration an Analyt und relativer Remission (Kalibrationskurve) wird dann bevorzugterweise mittels geläufiger mathematischer Funktionen (beispielsweise kubische Splinefunktion) auf einem Barcode verschlüsselt, so daß bei Messung von Proben eine direkte Umrechnung der gemessenen relativen Remissionen in entsprechende Konzentrationseinheiten erfolgt, die auf dem Display des Reflektometers abgelesen werden können.

Einzelheiten der Trübungsmessung sind in folgenden Normen geregelt: EN 27027, ISO 7027, US-Standard APHA 2120 B.

Weiterhin müssen alle Geräte, die für das erfindungsgemäße Verfahren eingesetzt werden, zunächst mit einem Standard, beispielsweise mit einer Standardlösung, vorkalibriert werden, wobei der Standard bevorzugterweise über den gesamten Wellenlängenbereich gleichmäßig absorbiert. Dadurch zeigen alle Geräte ein auf diese Standardlösung bezogenes gleichmäßiges Meßsignal, so daß vergleichende Messungen auch geräteunabhängig durchgeführt werden können.

Durch die spezielle Vorkalibration und Kalibration mit Standards zur Trübungsmessung unterscheiden sich die erfindungsgemäßen Geräte von allen bekannten Reflektometern. Sie können durch ihre Kalibration dem jeweiligen Bedarf und Meßproblem angepaßt werden.

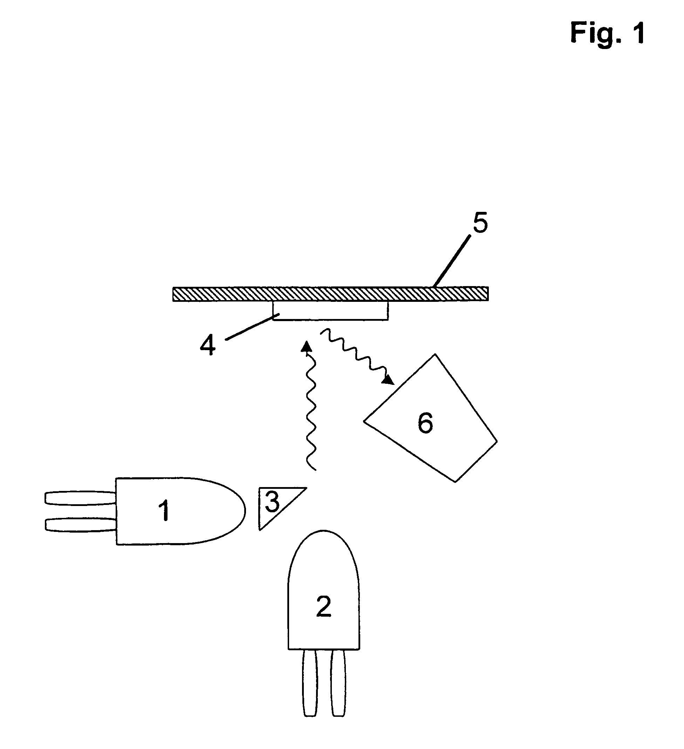

Abbildung 1 zeigt schematisch einen typischen Aufbau einer erfindungsgemäßen Meßvorrichtung. Als Lichtquelle dienen die Leuchtdioden 1 und 2. Sie ermöglichen das Einstrahlen unterschiedlicher Wellenlängen. Weiterhin können durch Prismen oder Spiegel (3) unterschiedliche Einstrahlwinkel erzielt werden. Der Strahl trifft auf die Probenküvette (4) und tritt durch sie hindurch. Dabei wird ein Teil des Strahl durch das Medium gestreut und geschwächt. Nach Durchtritt durch die Probe wird der Strahl an der Rückseite durch ein diffus reflektierendes Bauteil (5) diffus reflektiert. Nach erneutem Durchtritt durch die Probe wird die Lichtschwächung in einem Winkel zur Einstrahlrichtung mit einer Photodiode (6) gemessen. Strahlenquelle (1,2) und Detektor (6) befinden sich dabei auf derselben Seite der Küvette.

Auch ohne weitere Ausführungen wird davon ausgegangen, daß ein Fachmann die obige Beschreibung im weitesten Umfang nutzen kann. Die bevorzugten Ausführungsformen und Beispiele sind deswegen lediglich als beschreibende, keineswegs als in irgendeiner Weise limitierende Offenbarung aufzufassen.

### Beispiele

### 1. Analyse von Trübungsstandards

Formazinprimärstandards, wie sie zur Kalibration von Trübungsmeßgeräten eingesetzt werden, wurden unter Verwendung eines erfindungsgemäßen Reflektometers in Küvetten aus Makrolon® mit einer Schichtdicke von 0,6 mm vermessen. Die Remissionswerte wurden jeweils relativ zu destilliertem Wasser als Blindwert bei 660 nm ermittelt. Die Ergebnisse sind in Abb. 2 graphisch dargestellt. Auf der Ordinate ist die relative Remission, auf der Abszisse die Formazinschwächungseinheiten [FAU] aufgetragen.

### 2. Konzentrationsbestimmung von Sulfat durch Trübungsmessung

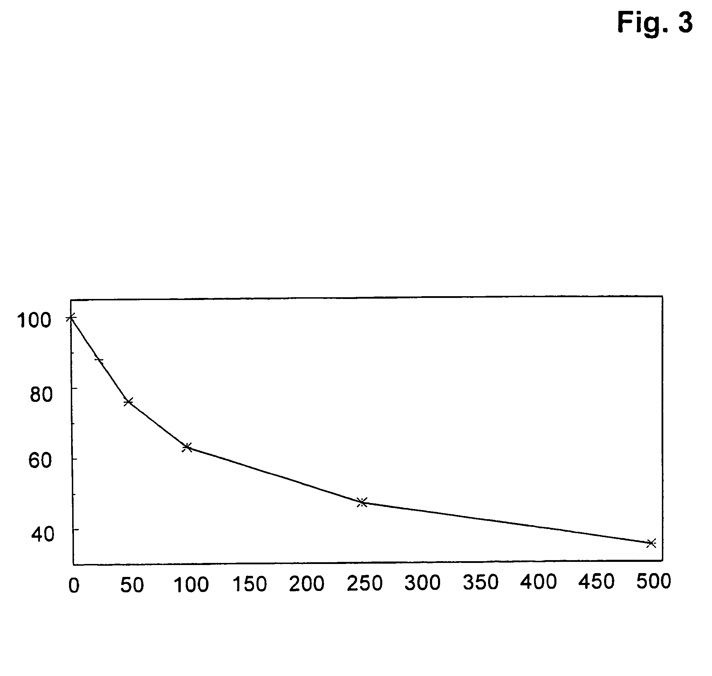

Zu 5 ml wäßriger Sulfatstandardlösung wurden 0,25 ml einer Lösung von Banumchloridhydrat in VE-Wasser (10 g BaCl₂ x 2 H₂O in 90 ml Wasser) zugegeben. Die Proben wurden gemäß Beispiel 1 vermessen. Der Zusammenhang zwischen der Konzentration an Sulfat und den erhaltenen relativen Remissionen ist in Abb. 3 graphisch dargestellt. Die relative Remission (Ordinate) wurde gegen die Konzentration von Sulfat in mg/l (Abszisse) aufgetragen.

### 3. Konzentrationsbestimmung von Kalium durch Trübungsmessung

Durchführung der Kalibration:
Kaliumstandardlösungen wurde mit Natronlauge alkalisch (pH 10,7) eingestellt. Darauf wurden jeweils zu 5 ml Probe nacheinander 0,3 ml Formaldehydlösung (37%) und mittels eines Mikrodosierlöffels ca. 100 mg Natriumtetraphenylborat zugegeben. Die Proben wurden gemäß Beispiel 1 vermessen.

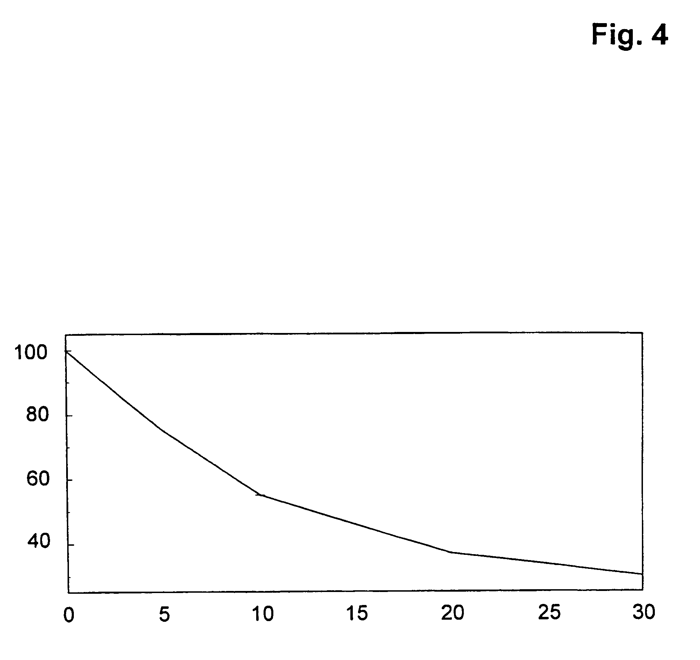

Der Zusammenhang zwischen der Konzentration an Kalium und den erhaltenen relativen Remissionen ist in Abb. 4 graphisch dargestellt. Dazu wurde die relative Remission (Ordinate) gegen die Konzentration von Kalium in mg/l (Abszisse) aufgetragen.

### SOLL - IST - Vergleich:

Der in Beispiel 3 erhaltene Zusammenhang zwischen Konzentration an Kalium und relativer Remission (Kalibrationskurve) wurde mittels einer geläufigen mathematischen Funktion (kubische Splinefunktion) auf einem Barcode verschlüsselt, so daß bei Messung von Proben eine direkte Umrechnung der gemessenen relativen Remmissionen in entsprechende Konzentrationseinheiten erfolgt, die auf dem Display des Reflektometers abgelesen werden können. Anschließend wurden verschiedene Kaliumstandards vermessen. Bei diesem SOLL - IST - Vergleich wurden nachfolgende Ergebnisse erhalten:

| SOLL [mg/l Kalium] | IST [mg/l Kalium] |
|---|---|
| 0,5 | 0,5 ± 0,1 |
| 2,5 | 2,5 ± 0,1 |
| 10,0 | 10,2 ± 0,5 |
| 25,0 | 25,9 ±0,9 |

### 4. Untersuchung von Bodenproben

Bodenproben wurden gemäß LUFA-Vorschrift (Verband Deutscher Landwirtschaftlicher Untersuchungs- u. Forschungsanstalten, Methodenhandbuch Band 1, Die Untersuchung von Böden, 4. Auflage 1991; Kapitel A 6.2.1.2) mit DL-Lösung extrahiert und gemäß der Durchführung bei der Kalibration behandelt. Die erhaltenen Proben wurden anschließend im Reflektometer vermessen. Vergleichend wurden die Proben mittels Atomabsorptionsspektrometrie (AAS) untersucht. Die erhaltenen Ergebnisse sind nachfolgend zusammengefaßt.

| **Probe** | **Trübungsmessung** | **AAS** |
|---|---|---|
| 1 | 4,6 | 4,8 |
| 2 | 5,2 | 5,1 |
| 3 | 21,8 | 23,4 |
| [Die Kalium-Gehalte sind in mg/l Extraktionslösung angegeben] | | |

## Patentansprüche

1. Reflektometrisches Verfahren zur Messung von Trübungen in Flüssigkeiten, **dadurch gekennzeichnet, daß** ein Lichtstrahl die Probe durchdringt, von einem diffus reflektierenden Bauteil diffus reflektiert wird, die Probe erneut durchdringt und die Intensität des abgeschwächten Lichtes gemessen wird.

2. Trübungsmeßvorrichtung zur reflektometrischen Bestimmung von Trübungen entsprechend Anspruch 1, mit einer Strahlungsquelle (1,2), einem Strahlungs-detektor (6) und einer Meßküvette (4) zur Aufnahme von Flüssigkeit, **dadurch gekennzeichnet, daß** sich Strahlungsquelle und Strahlungsdetektor bezüglich der Meßküvette auf derselben Seite befinden und dass sich auf der anderen Seite der Meßküvette ein diffus reflektierendes Bauteil befindet.

3. Trübungsmeßvorrichtung nach Anspruch 2, **dadurch gekennzeichnet, daß** das Gerät Leuchtdioden als Lichtquellen und Photodioden als Detektoren enthält.

## Claims

1. Reflectometric method for the measurement of turbidity in liquids, **characterised in that** a light beam passes through the sample, is diffusely reflected by a diffusely reflecting component, passes through the sample again, and the intensity of the attenuated light is measured.

2. Turbidity measuring device for the reflectometric determination of turbidity in accordance with Claim 1, using a radiation source (1,2), a radiation detector (6) and a measurement cell (4) for the accommodation of liquid, **characterised in that** the radiation source and radiation detector are located on the same side with respect to the measurement cell and **in that** a diffusely reflecting component is located on the other side of the measurement cell.

3. Turbidity measuring device according to Claim 2, **characterised in that** the instrument contains light diodes as light sources and photodiodes as detectors.

## Revendications

1. Procédé réflectométrique pour la mesure de la turbidité dans des liquides, **caractérisé en ce qu'**un faisceau lumineux passe au travers de l'échantillon, est réfléchi de façon diffuse par un composant réfléchissant de façon diffuse, passe au travers de l'échantillon à nouveau, et l'intensité de la lumière atténuée est mesurée.

2. Dispositif de mesure de turbidité pour la détermination réflectométrique de la turbidité selon la revendication 1, en utilisant une source de rayonnement (1, 2), un détecteur de rayonnement (6) et une cellule de mesure (4) pour la réception d'un liquide, **caractérisé en ce que** la source de rayonnement et le détecteur de rayonnement sont localisés sur le même côté par rapport à la cellule de mesure et **en ce qu'**un composant réfléchissant de façon diffuse est localisé sur l'autre côté de la cellule de mesure.

3. Dispositif de mesure de turbidité selon la revendication 2, **caractérisé en ce que** l'instrument contient des diodes émettrices de lumière en tant que sources de lumière et des photodiodes en tant que détecteurs.
